# EUROPÄISCHE PATENTSCHRIFT

(11) **EP 3 165 779 B1**
(45) Veröffentlichungstag und Bekanntmachung des Hinweises auf die Patenterteilung: **27.11.2019**
(21) Anmeldenummer: 16196040.6
(22) Anmeldetag: 27.10.2016
(51) Int. Cl.: F16B 13/08

(54) **KLEMMANKER ZUM VERANKERN IN EINEM BOHRLOCH SOWIE ANORDNUNG MIT EINEM DERARTIGEN KLEMMANKER**
CLAMPING ANCHOR TO BE ANCHORED IN A DRILL HOLE, AND ASSEMBLY COMPRISING SUCH A CLAMPING ANCHOR
ANCRAGE DE SERRAGE À ANCRER DANS UN TROU D'ALÉSAGE ET SYSTÈME COMPRENANT UN TEL ANCRAGE DE SERRAGE

(30) Priorität: 06.11.2015 DE 102015221890
(43) Veröffentlichungstag der Anmeldung: 10.05.2017
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- EP-A1- 0 690 239
- DE-A1- 4 433 918
- DE-A1- 19 601 990
- DE-A1-102008 025 765
- DE-B- 1 166 557
- GB-A- 1 321 479
- US-A- 3 021 745
- US-A- 5 957 643

## Beschreibung

Die vorliegende Patentanmeldung nimmt die Priorität der deutschen Patentanmeldung DE 10 2015 221 890.2 in Anspruch.

Die Erfindung betrifft einen Klemmanker zum Verankern in einem Bohrloch sowie eine Anordnung mit einem derartigen Klemmanker.

Ein Klemmanker beispielsweise in Form eines Deckennagels dient zum Einschlagen in ein Bohrloch. Derartige Klemmanker sind beispielsweise aus der DE 10 2008 025 765 A1, der EP 0 690 239 A1, der DE 196 01 990 A1, der GB 1 321 479 A und der US 3 021 745 A bekannt. Ein derartiger Klemmanker erfordert eine aufwändige Herstellung und eine komplizierte Verankerung in dem Bohrloch.

Der Erfindung liegt die Aufgabe zugrunde, einen Klemmanker derart weiterzubilden, dass er unaufwändig ausgeführt ist und insbesondere dessen Verankerung in einem Bohrloch vereinfacht ist.

Die Aufgabe wird durch die Merkmale der Ansprüche 1 und 14 gelöst. Der Kern der Erfindung besteht darin, dass ein Klemmanker mittels eines Klemmelements in einem Bohrloch verankert werden kann. Der Klemmanker weist einen Schaft mit einer Schaftlängsachse und mit einer Schaftausnehmung auf. Das Klemmelement ist zumindest bereichsweise in der Schaftausnehmung angeordnet. Wesentlich ist, dass das Klemmelement beweglich am Schaft befestigt ist. Wesentlich ist auch, dass das Klemmelement aus vergütetem Material besteht und eine Mindesthärte von 400 HV aufweist. Insbesondere ist das Klemmelement in einer bezogen auf die Schaftlängsachse radialen Richtung beweglich. Beim Einschlagen des Klemmankers in ein Bohrloch verkeilt das Klemmelement an der Bohrlochinnenwand und bewirkt eine zuverlässige und dauerhafte Verankerung im Bohrloch. Das Klemmelement ist verspannt zwischen dem Schaft und der Bohrlochinnenwand angeordnet. Dadurch, dass das Klemmelement aus vergütetem Material hergestellt ist, kann das Klemmelement beim Einschlagen des Klemmankers in ein das Bohrloch umgebendes Material eingetrieben werden.

Eine elastische Masse gemäß Anspruch 2 vereinfacht die bewegliche Anbringung des Klemmelements am Schaft. Die Masse ist eine Klebemasse, die, insbesondere unter UV-Licht aushärtet. Insbesondere härtet die Masse schnell aus, insbesondere in weniger als fünf Sekunden, insbesondere in weniger als drei Sekunden und insbesondere in weniger als einer Sekunde. Die Fertigung des Klemmankers, also die bewegliche Befestigung des Klemmelements am Schaft, ist vereinfacht. Die Masse ist dauerhaft elastisch. Die Masse ist kompressibel. Ein weiterer Vorteil der Masse ist deren Gleitwirkung. Beim Einschlagen des Klemmankers wirkt die Masse als Gleitmittel, sodass der Keil entlang der Bohrlochinnenwand besser gleiten kann. Die Klebemasse ist geeignet, metallische Materialien miteinander zu verbinden. Die Masse weist eine Shore-Härte zwischen 10 und 90 auf. Insbesondere beträgt die Shore-Härte zwischen 20 und 80, insbesondere zwischen 30 und 70, insbesondere zwischen 40 und 60 und insbesondere etwa 50. In Abhängigkeit des Einsatzzwecks, also insbesondere in Abhängigkeit des Materials des Schafts und/oder des Klemmelements und insbesondere in Abhängigkeit des Materials, in dem das Bohrloch vorgesehen ist, kann gezielt eine hohe oder niedrige Shore-Härte vorteilhaft sein.

Es ist auch möglich anstelle der Masse ein alternatives Befestigungselement zu verwenden, um das Klemmelement am Schaft zu befestigen. Das Befestigungselement kann beispielsweise aus elastischem Federstahl hergestellt sein und mit dem Klemmelement und dem Schaft verbunden sein. Das Befestigungselement kann streifenförmig oder als Drahtabschnitt ausgeführt sein. Das Befestigungselement gewährleistet eine elastisch federnde Befestigung des Klemmelements am Schaft.

Ein Klemmelement gemäß Anspruch 3 ermöglicht eine verbesserte Klemmwirkung. Die Verankerung des Klemmankers in dem Bohrloch ist verbessert.

Ein Klemmelement gemäß Anspruch 4 ist unaufwändig in der Herstellung und ermöglicht eine vorteilhafte, weil unaufwändige, Abringung am Schaft des Klemmankers.

Ein Klemmanker mit einem Klemmelement gemäß Anspruch 5 kann fehlerunanfällig in ein Bohrloch eingeschlagen werden. Dadurch, dass ein vorderes Klemmelementende zumindest bündig in der Schaftausnehmung angeordnet ist, ist gewährleistet, dass das vordere Klemmelementende zumindest anfänglich das Einschlagen des Klemmankers in das Bohrloch nicht erschwert oder behindert. Zumindest bündig bedeutet, dass das vordere Klemmelementende in radialer Richtung bezogen auf die Schaftlängsachse an dem Schaft nicht vorsteht. Es ist auch denkbar, dass das vordere Klemmelementende innerhalb der Schaftausnehmung angeordnet ist, ge genüber einer äußeren Zylindermantelwand des Schafts, also radial nach innen versetzt, zu der Schaftlängsachse hin, angeordnet ist.

Ein Klemmanker mit einem Klemmelement gemäß Anspruch 6 ermöglicht eine vereinfachte und insbesondere verbesserte Selbstklemmung. Das Klemmelement ist mit einem hinteren Klemmelementende am Schaft befestigt. Es ist auch möglich, dass das Klemmelement vollständig, also entlang der Längsachse über die gesamte Länge des Klemmelements mittels der Masse in der Schaftausnehmung eingeklebt ist.

Ein Klemmanker gemäß Anspruch 7 verbessert die selbstklemmende Verankerung im Bohrloch. Dadurch, dass das hintere Klemmelementende radial bezüglich der Schaftlängsachse am Schaft hervorstehend angeordnet ist, kann das hintere Klemmelementende an der Bohrlochinnenwand anstehen. Das hintere Klemmelementende wird zu dem Schaft in die Schaftausnehmung eingedrückt, wodurch insbesondere das vordere Klemmelementende aus der Schaftausnehmung radial herausgedrückt wird, um an der Bohrlochinnenwand anzuliegen und insbesondere sich dort zu verkeilen. Insbesondere weist das hintere Klemmelementende eine Dicke auf, die größer ist als die Dicke des Klemmelements am vorderen Klemmelementende. Die Dicke ist radial zur Schaftlängsachse orientiert.

Ein Klemmanker gemäß Anspruch 8 weist eine verbesserte, selbstklemmende Funktion auf.

Ein Klemmelement gemäß Anspruch 9 ermöglicht eine verbesserte Verankerung in dem das Bohrloch umgebende Material. Das Klemmelement weist eine Härte auf, die mindestens 500 HV, insbesondere mindestens 600 HV, insbesondere mindestens 750 HV, insbesondere mindestens 800 HV und insbesondere höchstens 900 HV beträgt. In Abhängigkeit des Einsatzzwecks, insbesondere des das Bohrloch umgebenden Materials, kann das vergütete Material eine gezielt reduzierte Härte von beispielsweise höchs tens 500 HV aufweisen. Grundsätzlich gilt, dass das Verankern des Klemmelements in dem das Bohrloch umgebende Material umso besser ist, je größer die Härte des Klemmelements ist.

Ein Klemmanker gemäß Anspruch 10 weist eine erhöhte Klemmwirkung auf.
Bei einem Klemmanker gemäß Anspruch 11 wird eine Klemmkraft in einer definierten Bohrlochtiefe und insbesondere gleich verteilt über den äußeren Umfang des Klemmankers aufgebracht.

Ein Klemmanker nach Anspruch 12 ermöglicht eine gezielte Verankerung an verschiedenen Bohrlochtiefen. Insbesondere kann eine beabsichtigte Klemmwirkung in Kenntnis des das Bohrloch umgebenden Materials gezielt eingestellt werden. Es ist denkbar, dass das das Bohrloch umgebende Material mehrschichtig aufgebaut ist und die einzelnen Schichten unterschiedliche Verankerungsbedingungen bezüglich des Klemmankers bieten.

Ein Ankopplungsabschnitt gemäß Anspruch 13 ermöglicht ein unmittelbares Ankoppeln eines Gegenstands an dem Klemmanker. Der Ankopplungsabschnitt kann beispielsweise ein einstückig mit dem Schaft ausgebildeter Kopf sein, der in radialer Richtung der Schaftlängsachse am Schaft übersteht. Der Ankopplungsabschnitt kann aber auch ein Gewindeabschnitt sein, insbesondere in Form eines metrischen Gewindes oder eines Außen-Grobgewindes. Das metrische Gewinde kann ein Innengewinde oder ein Außengewinde sein, um mit einer Befestigungsschraube oder einer Befestigungsmutter einen Gegenstand an dem Klemmanker lösbar zu befestigen. Der Ankopplungsabschnitt ist zumindest teilweise außerhalb des Bohrlochs angeordnet.

Eine Anordnung mit dem erfindungsgemäßen Klemmanker weist im Wesentlichen die Vorteile des Klemmankers selbst auf, worauf hiermit verwiesen wird. Dadurch, dass der Klemmanker zumindest bereichsweise einen Außendurchmesser aufweist, der größer ist als der Bohrlochinnendurchmesser, ist gewährleistet, dass der Klemmanker selbsttätig und zuverlässig klemmend im dem Bohrloch verankbar ist.
Weitere vorteilhafte Ausgestaltungen, zusätzliche Merkmale und Einzelheiten der Erfindung ergeben sich aus der nachfolgenden Beschreibung von drei Ausführungsbeispielen anhand der Zeichnung. Es zeigen:
- Fig. 1: einen Klemmanker zum Verankern in einem Bohrloch gemäß einem ersten Ausführungsbeispiel,
- Fig. 2: einen Längsschnitt einer Anordnung mit dem Klemmanker gemäß Fig. 1 in einem Bohrloch,
- Fig. 3: eine vergrößerte Schnittdarstellung gemäß Schnittlinie III-III in Fig. 2,
- Fig. 4: eine Fig. 1 entsprechende Darstellung eines Klemmankers gemäß einem zweiten Ausführungsbeispiel, und
- Fig. 5: eine Fig. 1 entsprechende Darstellung eines Klemmankers gemäß einem dritten Ausführungsbeispiel.

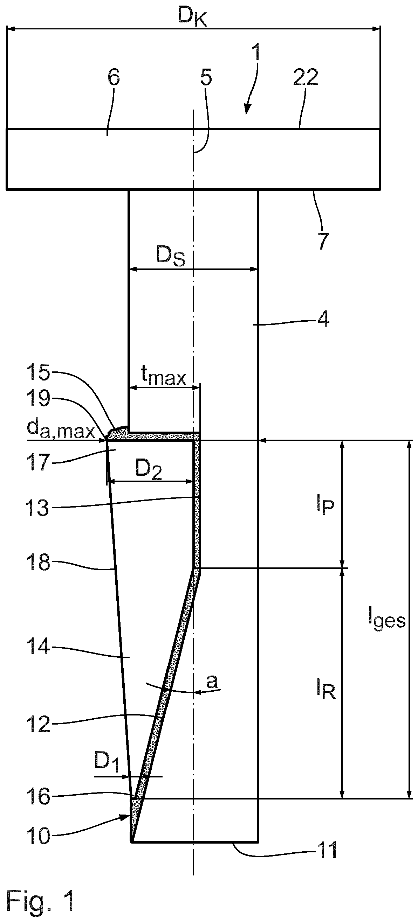

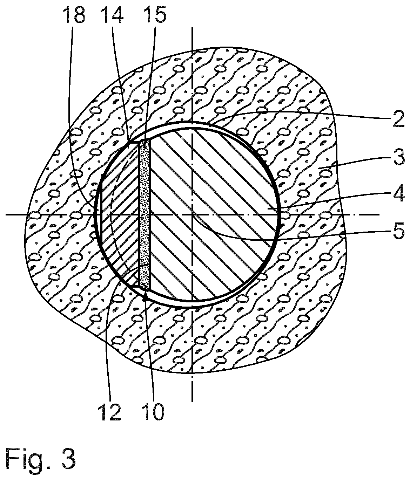

Ein in Fig. 1 bis 3 dargestellter Klemmanker 1 dient zum Verankern in einem Bohrloch 2 in einem Material 3. Das Material 3 kann Mauerwerk oder Beton sein. Insbesondere handelt es sich bei dem Material um poröses Material.

Der Klemmanker 1 weist einen im Wesentlichen zylindrischen Schaft 4 auf mit einer Schaftlängsachse 5. Einteilig mit dem Schaft 4 ist ein Ankopplungsabschnitt 6 in Form eines Kopfes angeformt. Der Kopf ist beispielsweise durch Massivumformung hergestellt. Der Kopf ist scheibenförmig ausgeführt und weist einen Kopfaußendurchmesser D_{K} auf, der größer ist als der Schaftdurchmesser D_{S}. Der Kopf ist geeignet, einen Gegenstand 9 zwischen einer Oberfläche 8 des Materials 3 und seiner Unterseite 7 in axialer Richtung bezogen auf die Schaftlängsachse 5 zu befestigen.

Der Schaft 4 weist ferner eine Schaftausnehmung 10 auf, die sich von einem stirnseitigen Ende 11 des Schafts 4 aus erstreckt und eine konische Verjüngung des Schafts 4 entlang der Schaftlängsachse 5 zu dem Ankopplungsabschnitt 6 hin bewirkt. In diesem Bereich weist die Schaftausnehmung 10 eine Rampe 12 auf. Ein gegenüber der Schaftlängsachse 5 geneigter Rampenwinkel a beträgt gemäß dem gezeigten Ausführungsbeispiel etwa 20°. Typischerweise liegt der Rampenwinkel a zwischen 5° und 35°, insbesondere zwischen 10° und 30° und insbesondere zwischen 15° und 25°. Die Schaftausnehmung 10 ist als keilförmige Kerbe ausgeführt.

An die Rampe 12 schließt sich entlang der Schaftlängsachse 5 ein Plateau 13 an. Das Plateau 13 zeichnet sich dadurch aus, dass die Tiefe t der Schaftausnehmung 10 im Wesentlichen konstant und insbesondere exakt konstant ist. Im Bereich des Plateaus 13 ist die Schaftausnehmung 10 parallel zur Schaftlängsachse 5 ausgeführt. Im Bereich der Rampe 12 steigt die Tiefe tₘᵢₙ beginnend von einem Minimalwert, insbesondere dem Wert 0, bis zu einer maximalen Tiefe tₘₐₓ im Bereich des Plateaus 13, insbesondere linear. Im Bereich des Plateaus 13 ist die Tiefe tₘₐₓ der Schaftausnehmung maximal. Gemäß dem gezeigten Ausführungsbeispiel gilt: tₘₐₓ ≥ 0,5 · D_{S}. Der Schaftdurchmesser D_{S} beträgt typischerweise zwischen 6 mm und 8 mm. Die Relation der maximalen Tiefe tₘₐₓ der Schaftausnehmung 10 kann gegenüber dem Schaftdurchmesser D_{S} auch abweichend festgelegt sein. Es ist auch denkbar, dass die maximale Tiefe tₘₐₓ der Schaftausnehmung 10 kleiner ist als die Hälfte des Schaftdurchmessers D_{S}.

Die Rampe 12 weist eine Rampenlänge l_{R} auf. Die Rampenlänge l_{R} erstreckt sich entlang der Schaftlängsachse 5 über etwa 30 % der Gesamtlänge l_{ges} des Klemmelements 14. Insbesondere gilt l_{R} ≤ 0,5 · l_{ges}, insbesondere l_{R} ≤ 0,4 · l_{ges}, insbesondere l_{R} ≤ 0,3 · l_{ges}, insbesondere l_{R} ≤ 0,25 · l_{ges} und insbesondere l_{R} ≤ 0,2 · l_{ges}. Die Plateaulänge lp erstreckt sich entsprechend über etwa 70 % der Gesamtlänge l_{ges}. Insbesondere gilt l_{P} ≥ 0,5 · l_{ges}, insbesondere l_{P} ≥ 0,6 · l_{ges}, insbesondere l_{P} ≥ 0,7 · l_{ges}, insbesondere l_{P} ≥ 0,75 · l_{ges} und insbesondere l_{P} ≥ 0,8 · l_{ges}.

In der Schaftausnehmung 10 ist ein korrespondierendes Klemmelement 14 angeordnet. Durch das Klemmelement 14 ist die Schaftausnehmung 10 im Wesentlichen ausgefüllt. Das Material, aus dem das Klemmelement 14 hergestellt ist, ist vergütet. Das vergütete Material weist eine Mindesthärte von 400 HV auf. Der Schaft 4 und/oder des Klemmelement können aus Stahl und/oder Edelstahl hergestellt sein. Das Klemmelement 14 ist in der Schaftausnehmung 10 mittels einer elastischen Masse 15 befestigt. Die Masse 15 ist eine Klebemasse. Die Masse 15 ist dauerhaft elastisch.

Gemäß dem gezeigten Ausführungsbeispiel ist die Masse 15 vollflächig in der Schaftausnehmung 10 angeordnet. Das Klemmelement 14 ist flächig in der Schaftausnehmung 10 befestigt. Zum Befestigen des Klemmelements 14 in der Schaftausnehmung 10 wird die Masse in einem fließfähigen Zustand in die Schaftausnehmung 10 gegeben und anschließend das Klemmelement 14 eingelegt. Anschließend härtet die Masse 15 aus. Aufgrund der Elastizität der Masse 15 ist das Klemmelement 14 beweglich am Schaft 4 befestigt. Die Beweglichkeit des Klemmelements 14 ergibt sich insbesondere in radialer Richtung zur Schaftlängsachse 5. Insbesondere ist auch eine Beweglichkeit des Klemmelements 14 in der Schaftausnehmung 10 entlang der Schaftlängsachse 5 möglich.

Das Klemmelement 14 ist keilförmig ausgebildet mit einem vorderen, dem stirnseitigen Ende 11 zugewandten ersten Klemmelementende 16. Das stirnseitige Ende 11 ist ein Einführende des Klemmankers 1 am Schaft 4.

Das Klemmelement 14 ist mit dem ersten Klemmelementende 16 zumindest bündig in der Schaftausnehmung 10 angeordnet.

Das Klemmelement 14 weist ferner ein zweites Klemmelementende 17 auf, das dem Einführende des Schafts 4 abgewandt angeordnet ist. Wesentlich ist, dass das Klemmelement 14 zumindest im Bereich des zweiten Klemmelementendes 17 am Schaft 4 befestigt ist.

Das erste Klemmelementende 16 weist eine erste Dicke D₁ auf, die radial zur Schaftlängsachse 5 orientiert ist. Im Bereich des zweiten Klemmelementendes 17 weist das Klemmelement 14 eine zweite Dicke D₂ auf.

Das hintere, zweite Klemmelementende 17 ragt an dem Schaft 4 in radialer Richtung bezüglich zur Schaftlängsachse 5 am Schaft 4 hervor. In diesem Bereich weist der Klemmanker 1 eine lichte Weite auf, die größer ist als der Schaftdurchmesser D_{S}.

An einer dem Schaft 4 abgewandten Rückseite 18 sind an dem Klemmelement 14 mehrere, nicht im Einzelnen dargestellte Querrillen vorgesehen.

Die Querrillen sind in das Klemmelement 14 insbesondere eingestanzt. Die Querrillen bewirken eine Strukturierung bzw. Aufrauung der Oberfläche der Rückseite 18. Es ist auch denkbar, eine gezielte Aufrauung der Oberfläche und/oder Strukturierung durch andere Maßnahmen zu erreichen wie beispielsweise eine Oberflächenbehandlung. Die aufgeraute Oberfläche der Rückseite 18 des Klemmelements 14 bewirkt ein zusätzliches Verkeilen des Klemmelements 14 im Bohrloch 2, insbesondere bei einer Kraftbeaufschlagung des Klemmankers 1 in einer Richtung aus dem Bohrloch 2 heraus.

Im Bereich des maximalen Außendurchmesser d_{a, max} ist die hintere Keilkante 19 angeordnet.

Dem stirnseitigen Ende 11 gegenüberliegend ist an dem Schaft 4 eine Einschlagfläche 22 vorgesehen, um den Klemmanker 1 in das Bohrloch 2 einzuschlagen. Die Einschlagfläche 22 ist durch die kreisförmige Oberfläche des scheibenförmigen Tellerabschnitts Kopfes gebildet.

Entlang der Schaftlängsachse 5 weist der Klemmanker 1 zumindest im Bereich der Schaftausnehmung 10 einen veränderlichen, sich zu dem Ankopplungsabschnitt 6 hin aufweitenden Außendurchmesser auf.

Nachfolgend wir ein Verfahren zum Verankern des Klemmankers 1 in dem Bohrloch 2 näher erläutert.

Zunächst wird in das Material 3 das Bohrloch 2 eingebohrt. Dann wird der Gegenstand 9 mit einer Befestigungsöffnung fluchtend zu der Bohrlochöffnung an der Oberseite 8 des Materials 3 angeordnet. Anschließend wird der Klemmanker 1 mit dem stirnseitigen Ende 11 durch die Öffnung des Gegenstands 9 in das Bohrloch 2 gesteckt. Dadurch, dass ein Bohrlochinnendurchmesser dᵢ des Bohrlochs 2 kleiner ist als ein maximaler Au-ßendurchmesser d_{a, max} des Klemmankers 1 in dem unbelasteten Zustand des Klemmankers 1 gemäß Fig. 1, wird das Klemmelement 14 im Bereich des maximalen Außendurchmessers d_{a, max} in radialer Richtung bezogen auf die Schaftlängsachse 5 zu dem Schaft 4 hin, insbesondere in die Schafausnehmung 10 gedrückt.

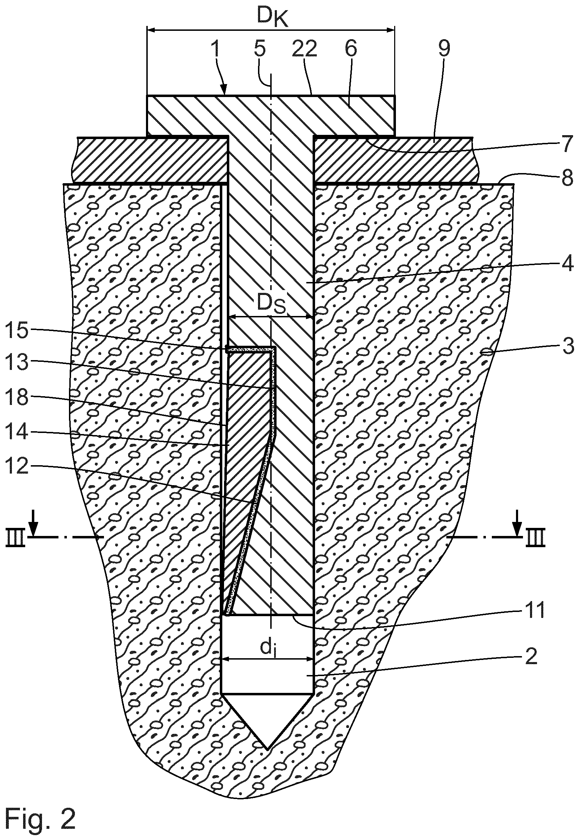

Aufgrund der beweglichen, elastisch federnden Befestigung des Klemmelements 14 in der Schaftausnehmung 10 wird das Klemmelement 14 mit dem vorderen, ersten Klemmelementende 16 von dem Schaft 4 in radialer Richtung bezogen auf die Schaftlängsachse 5 weggedrückt. Durch das Wegdrücken des Klemmelements 14 wird das vordere, erste Klemmelementende 16 aus der Schaftausnehmung 10 heraus verlagert, wie dies in Fig. 2 angedeutet ist. Dadurch, dass das erste Klemmelementende 16 zunächst innerhalb der Schaftausnehmung 10 angeordnet ist, ist das manuelle Einschieben des Klemmankers 1 in das Bohrloch 2 mit reduziertem Kraftaufwand möglich. Der Klemmanker 1 kann manuell in dem Bohrloch 2 fixiert werden. Insbesondere bei der Ausführung des Klemmankers 1 als Deckennagel ist diese Eignung vorteilhaft. Der Klemmanker 1 kann manuell klemmend in dem Bohrloch 2 angeordnet werden, sodass ein unbeabsichtigtes Herausfallen des Klemmankers 1 aus dem Bohrloch 2 infolge der Schwerkraft vermieden ist.

Dadurch, dass die Masse 15 elastisch federnd ausgeführt ist, wird permanent eine rückstellende Federkraft von dem Klemmelement 14 auf die Bohrlochinnenwand ausgeübt. Die Verankerung des Klemmankers 1 in dem Bohrloch 2 ist dauerhaft zuverlässig.

Die Masse 15 ist aber nicht nur in radialer Richtung belastet, die die radiale Gegenkraft bewirkt sondern das Klemmelement 14 ist auf im Wesentlichen in axialer Richtung zur Schaftlängsachse 5 gestaucht. Die Masse 15 übt eine in Einschubrichtung wirkende Gegenkraft auf das Klemmelement 14 aus. Dadurch wird das Klemmelement 14 mit dem ersten Klemmelementende 16 nach unten, zu Bohrlochgrund hin gedrückt. Dadurch, dass die komprimierte elastische Masse 15 das Klemmelement 14 nach vorne, zu dem stirnseitigen Ende 11 hin drückt, wird das Klemmelement 14 entlang der Rampe 12 auch radial nach außen gedrückt.

Insbesondere dadurch, dass das Klemmelement 14 erfindungsgemäß aus vergütetem Material hergestellt ist, kann das Klemmelement 14, insbesondere im Bereich des ersten Klemmelementendes 16, in das das Bohrloch 2 umgebende Material 3 eindringen. Die Verankerung ist dadurch zusätzlich verbessert. Es ist gewährleistet, dass unmittelbar nach dem Einschlagen des Klemmankers 1 in das Bohrloch 2 das Klemmelement 14 radial nach außen verlagert wird und eine Klemmung des Klemmankers 1 in dem Bohrloch 2 bewirkt.

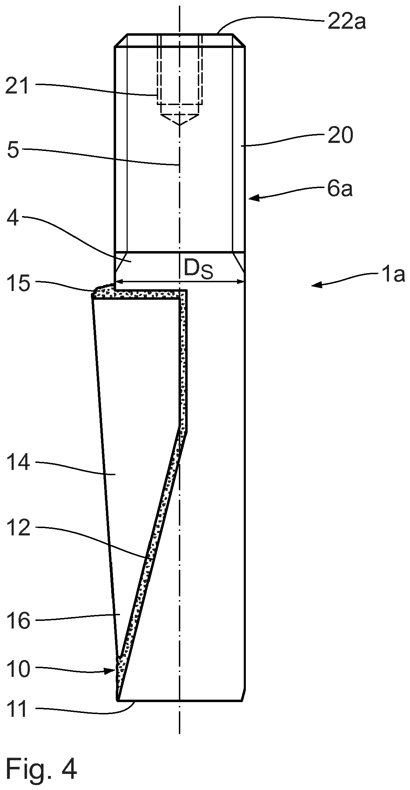

Im Folgenden wird unter Bezugnahme auf Fig. 4 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied des Klemmankers 1a besteht in der Ausführung des Ankopplungsabschnitts 6a, der gemäß dem gezeigten Ausführungsbeispiel nicht als Kopf, sondern als Befestigungsgewinde 20 ausgeführt ist. Gemäß dem gezeigten Ausführungsbeispiel ist das Befestigungsgewinde 20 ein metrisches Außengewinde. Es ist auch denkbar, dass es als metrisches Innengewinde ausgeführt ist, in das eine Schraube einschraubbar ist. Auf das Befestigungsgewinde 20 kann eine Haltemutter aufgeschraubt werden. Die aufgeschraubte Haltemutter erfüllt dann im Wesentlichen die Haltefunktion des Kopfes gemäß dem ersten Ausführungsbeispiel. Zusätzlich kann eine Innenbohrung 21 mit Innengewinde vorgesehen sein, um im Bereich des Ankopplungsabschnitts 6a eine zusätzliche Ankopplungsmöglichkeit zu schaffen.

Bei dem Klemmanker 1a ist die Einschlagfläche 22a kreisförmig und insbesondere ringförmig ausgeführt. Die Einschlagfläche 22a weist eine Querschnittsfläche auf, die im Wesentlichen der Querschnittsfläche des Schafts 4 entspricht.

Bei dem Klemmanker 1a ist es insbesondere nicht erforderlich, einen zu befestigenden Gegenstand fluchtend mit dem Bohrloch 2 anzuordnen, bevor der Klemmanker 1a in das Bohrloch 2 eingesteckt wird. Es ist möglich, den Klemmanker 1a in dem Bohrloch 2 zu verankern, anschließend den Gegenstand über den am Bohrloch 2 vorstehenden Ankopplungsabschnitt 6a aufzustecken und anschließend eine Befestigungsmutter am Befestigungsgewinde 20 zum Halten des Gegenstands aufzuschrauben.

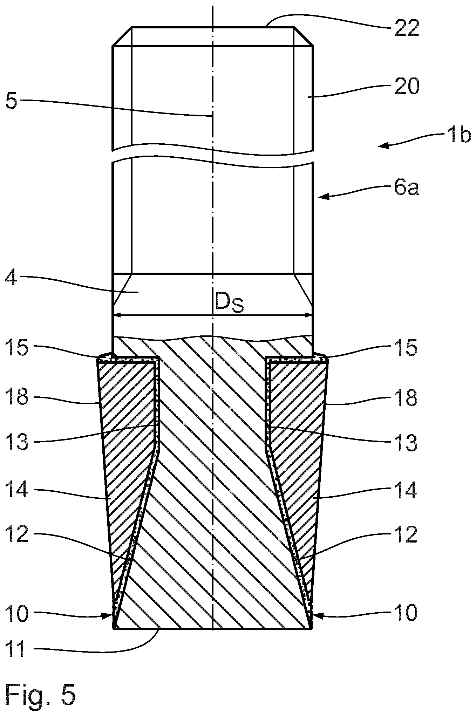

Im Folgenden wird unter Bezugnahme auf Fig. 5 ein drittes Ausführungsbeispiel der Erfindung beschrieben. Konstruktiv identische Teile erhalten dieselben Bezugszeichen wie bei dem zweiten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b.

Der Klemmanker 1b entspricht im Wesentlichen dem Klemmanker 1a, wobei der Schaftdurchmesser Ds vergrößert ist. Der Schaftdurchmesser Ds weist beispielsweise 10 mm oder mehr auf. Bei dem Klemmanker 1b sind mehrere Klemmelemente 14 vorgesehen, die jeweils in einer Schaftausnehmung 10 angeordnet sind. Gemäß dem gezeigten Ausführungsbeispiel sind entlang des äußeren Umfangs vier Klemmelemente 14 vorgesehen. Die Klemmelemente 14 sind entlang des äußeren Umfangs an der Zylindermantelfläche des Schafts 4 gleich beabstandet, also mit einem Zwischenwinkel von 90° bezogen auf die Schaftlängsachse 5, angeordnet. Es können auch mehr oder weniger als vier Klemmelemente 14 vorgesehen sein. Durch eine Erhöhung der Klemmelementanzahl wird die Klemmelementwirkung verbessert. Insbesondere sind die einzelnen Klemmelemente 14 identisch zueinander ausgeführt. Gemäß dem gezeigten Ausführungsbeispiel sind die Klemmelemente 14 bezogen auf ihre Position entlang der Schaftlängsachse 5 identisch angeordnet. Es ist auch denkbar, einzelne Klemmelemente entlang der Schaftlängsachse 5 versetzt zueinander anzuordnen. Durch die Auswahl der Anzahl der Klemmelemente 14 sowie deren Anordnung am Schaft 4 kann die mit dem Klemmanker 1 erzielte Klemmwirkung, insbesondere lokal unterschiedlich, eingestellt werden.

Es ist auch denkbar, dass entlang der Schaftlängsachse 5 mehr als ein Klemmelement hintereinander angeordnet sind.

## Patentansprüche

1. Klemmanker zum Verankern in einem Bohrloch (2) umfassend
a. einen Schaft (4) mit einer Schaftlängsachse (5) und mit einer Schaftausnehmung (10),
b. ein zumindest bereichsweise in der Schaftausnehmung (10) angeordnetes Klemmelement (14),
wobei das Klemmelement (14) beweglich am Schaft (4) befestigt ist,
**dadurch gekennzeichnet, dass**
das Klemmelement (14) zum besseren Verankern in einem das Bohrloch (2) umgebenden Material aus einem vergüteten Material besteht und eine Mindesthärte von 400 HV aufweist.

2. Klemmanker gemäß Anspruch 1, **dadurch gekennzeichnet, dass** das Klemmelement (14) mittels einer aushärtenden, elastischen Klebemasse (15) beweglich am Schaft (4) befestigt ist.

3. Klemmanker gemäß einem der vorstehenden Ansprüche, **dadurch gekennzeichnet, dass** das Klemmelement (14) keilförmig ausgeführt ist.

4. Klemmanker gemäß einem der vorstehenden Ansprüche, **dadurch gekennzeichnet, dass** das Klemmelement (14) eine Klemmelementlängsachse aufweist, die parallel zur Schaftlängsachse (5) orientiert ist.

5. Klemmanker gemäß einem der vorstehenden Ansprüche, **dadurch gekennzeichnet, dass** das Klemmelement (14) mit einem vorderen, insbesondere einem Einführende des Schafts (4) zugewandten, Klemmelementende (16) zumindest bündig in der Schaftausnehmung (10) angeordnet ist.

6. Klemmanker gemäß einem der vorstehenden Ansprüche, **dadurch gekennzeichnet, dass** das Klemmelement (14) mit einem hinteren, insbesondere einem Einführende des Schafts (4) abgewandten, Klemmelementende (17) am Schaft (4) befestigt ist.

7. Klemmanker gemäß Anspruch 6, **dadurch gekennzeichnet, dass** das hintere Klemmelementende (17) radial bezüglich der Schaftlängsachse (5) am Schaft (4) hervorstehend angeordnet ist.

8. Klemmanker gemäß einem der vorstehenden Ansprüche, **dadurch gekennzeichnet, dass** der Klemmanker (1; 1a; 1b) durch das Klemmelement (14) zumindest abschnittsweise entlang der Schaftlängsachse (5) einen aufweitenden Außendurchmesser aufweist.

9. Klemmanker gemäß einem der vorstehenden Ansprüche, **dadurch gekennzeichnet, dass** das Klemmelement (14) eine Mindesthärte aufweist von 500 HV, insbesondere von mindestens 600 HV, insbesondere von mindestens 750 HV, insbesondere von mindestens 800 HV und insbesondere von höchstens 900 HV.

10. Klemmanker gemäß einem der vorstehenden Ansprüche, **gekennzeichnet durch** mehrere Klemmelemente (14), die jeweils in einer Schaftausnehmung (10) angeordnet sind.

11. Klemmanker gemäß Anspruch 10, **dadurch gekennzeichnet, dass** die Klemmelemente (14) entlang eines äußeren Umfangs des Schafts (4) gleichmäßig beabstandet angeordnet sind.

12. Klemmanker gemäß Anspruch 10 oder 11, **dadurch gekennzeichnet, dass** die Klemmelemente (14) entlang der Schaftlängsachse (5) beabstandet zueinander angeordnet sind.

13. Klemmanker gemäß einem der vorstehenden Ansprüche, **gekennzeichnet durch** einen einstückig mit dem Schaft (4) ausgebildeten Ankopplungsabschnitt (6; 6a; 6b) zum Ankoppeln eines Gegenstands (9).

14. Anordnung umfassend
a. ein Bohrloch (2) mit einem Bohrlochinnendurchmesser (dᵢ),
b. einen Klemmanker (1; 1a; 1b) gemäß einem der vorstehenden Ansprüche,
wobei der Klemmanker (1; 1a; 1b) zumindest bereichsweise einen Au-ßendurchmesser (dₐ) aufweist, der größer ist als der Bohrlochinnendurchmesser (dᵢ).

## Claims

1. Clamping anchor for anchoring in a drill hole (2), comprising
a) a shank (4) having a shank longitudinal axis (5) and having a shank recess (10);
b) a clamping element (14) that is at least in regions disposed in the shank recess (10);
wherein the clamping element (14) is fastened so as to be movable on the shank (4),
**characterized in that**
the clamping element (14) for improved anchoring in a material surrounding the drill hole (2) is composed of a heat-treated material and has a minimum hardness of 400 HV.

2. Clamping anchor according to Claim 1, **characterized in that** the clamping element (14) is fastened so as to be movable on the shank (4) by means of a curing, elastic adhesive compound (15).

3. Clamping anchor according to one of the preceding claims, **characterized in that** the clamping element (14) is embodied so as to be wedge-shaped.

4. Clamping anchor according to one of the preceding claims, **characterized in that** the clamping element (14) has a clamping element longitudinal axis which is oriented so as to be parallel to the shank longitudinal axis (5).

5. Clamping anchor according to one of the preceding claims, **characterized in that** the clamping element (14) by way of front clamping element end (16) that in particular faces an introduction end of the shank (4) is disposed so as to be flush at least in the shank recess (10).

6. Clamping anchor according to one of the preceding claims, **characterized in that** the clamping element (14) by way of a rear clamping element end (17) that in particular faces away from an introduction end of the shank (4) is fastened to the shank (4).

7. Clamping anchor according to Claim 6, **characterized in that** the rear clamping element end (17) is disposed on the shank (4) so as to project radially in relation to the shank longitudinal axis (5).

8. Clamping anchor according to one of the preceding claims, **characterized in that** the clamping anchor (1; 1a; 1b) along the shank longitudinal axis (5) through the clamping element (14) at least in regions has a widening external diameter.

9. Clamping anchor according to one of the preceding claims, **characterized in that** the clamping element (14) has a minimum hardness of 500 HV, in particular of at least 600 HV, in particular of at least 750 HV, in particular of at least 800 HV, and in particular of at most 900 HV.

10. Clamping anchor according to one of the preceding claims, **characterized by** a plurality of clamping elements (14) which are in each case disposed in a shank recess (10).

11. Clamping anchor according to Claim 10, **characterized in that** the clamping elements (14) are disposed so as to be uniformly spaced apart along an external circumference of the shank (4).

12. Clamping anchor according to Claim 10 or 11, **characterized in that** the clamping elements (14) are disposed so as to be mutually spaced apart along he shank longitudinal axis (5).

13. Clamping anchor according to one of the preceding claims, **characterized by** a coupling portion (6; 6a; 6b) which for coupling to an object (9) is configured so as to be integral to the shank (4).

14. Assembly comprising
a) a drill hole (2) having a drill hole internal diameter (dᵢ);
b) a clamping anchor (1; 1a; 1b) according to one of the preceding claims,
wherein the clamping anchor (1; 1a; 1b) at least in regions has an external diameter (dₐ) which is larger than the drill hole internal diameter (dᵢ).

## Revendications

1. Ancrage de serrage à ancrer dans un trou foré (2) comprenant
a. une tige (4) avec un axe longitudinal de tige (5) et avec un évidement de tige (10),
b. un élément de serrage (14) disposé au moins par endroits dans l'évidement de tige (10),
dans lequel l'élément de serrage (14) est fixé de manière mobile sur la tige (4),
**caractérisé en ce que**
l'élément de serrage (14), pour un meilleur ancrage dans un matériau entourant le trou foré (2), est constitué d'un matériau trempé et revenu et présente une dureté minimale de 400 HV.

2. Ancrage de serrage selon la revendication 1, **caractérisé en ce que** l'élément de serrage (14) est fixé sur la tige (4) de manière mobile au moyen d'une substance adhésive (15) élastique durcissante.

3. Ancrage de serrage selon l'une quelconque des revendications précédentes, **caractérisé en ce que** l'élément de serrage (14) est cunéiforme.

4. Ancrage de serrage selon l'une quelconque des revendications précédentes, **caractérisé en ce que** l'élément de serrage (14) présente un axe longitudinal d'élément de serrage, qui est orienté parallèlement à l'axe longitudinal de tige (5).

5. Ancrage de serrage selon l'une quelconque des revendications précédentes, **caractérisé en ce que** l'élément de serrage (14) est disposé dans l'évidement de tige (10) au moins au même niveau qu'une extrémité d'élément de serrage (16) avant, en particulier tournée vers une extrémité d'introduction de la tige (4).

6. Ancrage de serrage selon l'une quelconque des revendications précédentes, **caractérisé en ce que** l'élément de serrage (14) est fixé sur la tige (4) avec une extrémité d'élément de serrage (17) arrière, en particulier opposée à une extrémité d'introduction de la tige (4).

7. Ancrage de serrage selon la revendication 6, **caractérisé en ce que** l'extrémité d'élément de serrage (17) arrière est disposée de manière à faire saillie radialement par rapport à l'axe longitudinal de tige (5) sur la tige (4).

8. Ancrage de serrage selon l'une quelconque des revendications précédentes, **caractérisé en ce que** l'ancrage de serrage (1 ; 1a ; 1b) à travers l'élément de serrage (14) présente au moins en partie le long de l'axe longitudinal de tige (5) un diamètre extérieur s'élargissant.

9. Ancrage de serrage selon l'une quelconque des revendications précédentes, **caractérisé en ce que** l'élément de serrage (14) présente une dureté minimale de 500 HV, en particulier d'au moins 600 HV, en particulier d'au moins 750 HV, en particulier d'au moins 800 HV et en particulier de maximum 900 HV.

10. Ancrage de serrage selon l'une quelconque des revendications précédentes, **caractérisé par** plusieurs éléments de serrage (14), qui sont disposés respectivement dans un évidement de tige (10).

11. Ancrage de serrage selon la revendication 10, **caractérisé en ce que** les éléments de serrage (14) sont disposés à distance régulière le long d'une périphérie extérieure de la tige (4).

12. Ancrage de serrage selon la revendication 10 ou 11, **caractérisé en ce que** les éléments de serrage (14) sont disposés à distance les uns des autres le long de l'axe longitudinal de tige (5).

13. Ancrage de serrage selon l'une quelconque des revendications précédentes, **caractérisé par** une partie d'accouplement (6 ; 6a ; 6b) réalisée d'une seule pièce avec la tige (4) pour l'accouplement d'un objet (9).

14. Ensemble comprenant
a. un trou foré (2) avec un diamètre intérieur de trou foré (dᵢ),
b. un ancrage de serrage (1 ; 1a ; 1b) selon l'une quelconque des revendications précédentes,
dans lequel l'ancrage de serrage (1 ; 1a ; 1b) présente au moins par endroits un diamètre extérieur (dₐ), qui est plus grand que le diamètre intérieur de trou foré (dᵢ).
